# EUROPÄISCHE PATENTANMELDUNG

(11) **EP 3 763 492 A1**
(43) Veröffentlichungstag der Anmeldung: **13.01.2021**
(21) Anmeldenummer: 20185421.3
(22) Anmeldetag: 13.07.2020
(51) Int. Cl.: B25J 15/04

(54) **SYSTEM UND VERFAHREN ZUM WECHSELN EINES ENDEFFEKTORS AN EINEM ROBOTER**

(30) Priorität: 12.07.2019 DE 102019118903
(71) Anmelder: pi4_robotics GmbH, 13355 Berlin (DE)
(72) Erfinder: FÖRSTER, Tilo, 02763 Mittelherwigsdorf (DE); PIRK, Felix, 10439 Berlin (DE); KRINKE, Matthias, 10437 Berlin (DE)
(74) Vertreter: Kruspig, Volkmar

(57) **Zusammenfassung**

Die Erfindung betrifft ein System zum Wechseln eines Endeffektors an einem Roboter, aufweisend eine Haltevorrichtung und mindestens einen Endeffektor, wobei der Endeffektor reversibel mit einem Roboterelement, insbesondere einem Anschlusselement des Roboterelements, das ein Entriegelungselement, insbesondere ein Entriegelungshebel, aufweist, verbindbar ist, wobei der Endeffektor und/oder die Haltevorrichtung dazu ausgebildet sind, dass der Endeffektor, insbesondere über eine Translations- und/oder Rotationsbewegung; in die Haltevorrichtung so einsetzbar ist, dass der Endeffektor in einer Halteposition in der Haltevorrichtung gehalten wird, wobei die Haltevorrichtung dazu ausgebildet ist, in der Halteposition derart an dem Entriegelungselement anzuschlagen und/oder dieses aufzunehmen, dass eine Verbindung zwischen dem Roboterelement und dem Endeffektor über eine Rotation hergestellt oder gelöst werden kann.

## Beschreibung

Die Erfindung betrifft ein System und ein Verfahren zum Wechseln eines Endeffektors an einem Roboter.

Damit Roboter unterschiedliche Aufgaben durchführen können, ist es meist nötig, den Endeffektor des Roboters an unterschiedliche Aufgaben anzupassen.

Ein konventionelles System zum Wechseln eines Endeffektors umfasst üblicherweise eine Wechselvorrichtung, die einen Endeffektor mittels eines Flansches an einen Arm des Roboters koppelt. Die Vorrichtung sichert so neben der mechanischen Verbindung den Energie-, Informations- und Stoffschluss zwischen Arm und Endeffektor. Die Ver- und Entriegelung erfolgt in der Aufnahme- und Ablageposition des Endeffektors in einem Magazin durch Antriebselemente in der Wechselvorrichtung. Entsprechend der Schnittstelle der Vorrichtung und der Antriebsart der Wechselvorrichtung wird zwischen manuellen und automatischen Wechselvorrichtungen unterschieden. Bei einer manuellen Wechselvorrichtung wird ein mechanischer Ver- bzw. Entriegelungsmechanismus zwischen Roboter und Endeffektor durch einen Menschen von Hand betätigt. Bei einer automatischen Wechselvorrichtung wird der Verriegelungsmechanismus zwischen Endeffektor und Roboter mittels eines Antriebs betätigt, der kein Teil des Roboters ist. Hierbei kommt üblicherweise ein pneumatischer Antrieb oder ein elektrischer Motor zum Einsatz.

Manuelle Systeme haben den Nachteil, dass ein Mitarbeiter vor Ort sein muss, und den Wechselvorgang des Endeffektors manuell durchführen muss. Dies macht mehrere Endeffektor Wechselvorgänge pro Minute praktisch unmöglich.

Gewöhnliche automatische Systeme haben den Nachteil, dass technisch höchst aufwendige Wechselvorrichtungen genutzt werden müssen, die über eine separate Energiezufuhr (elektrisch oder pneumatisch) verfügen. Oftmals steht eine derartige Energiezufuhr nicht zur Verfügung, weil beispielsweise ein verwendeter Roboter nicht über ein Pneumatiksystem verfügt, oder die vorhandene elektrische Energie nicht ausreicht, um die Wechselvorrichtung entsprechend zu betreiben.

Ferner müssen bei automatischen Wechselvorrichtungen eine Vielzahl an zusätzlichen Bauteilen, wie pneumatische Ventile und Zylinder, Schläuche, Steuerungseinrichtungen mit entsprechenden Verkabelungen, oder Elektromotoren bzw. Spulen, verwendet werden. Derartige Bauteile sind kostspielig und wartungsintensiv. Des Weiteren bringen sämtliche zusätzliche Bauteile eine Eigenmasse mit. Speziell bei Bauteilen, die an bewegten Roboterteilen befestigt werden müssen, geht dies auf Kosten der zur Verfügung stehenden maximalen Traglast des Roboters.

Der Erfindung liegt somit die Aufgabe zugrunde, den Wechselvorgang eines Endeffektors zu vereinfachen. Insbesondere sollen ein System und ein Verfahren zum Wechseln eines Endeffektors angegeben werden, dass die vorhergehend beschriebenen Probleme vermeidet.

Diese Aufgabe wird erfindungsgemäß durch die Gegenstände gemäß den Ansprüchen 1, 8, 9 und 10 gelöst.

Insbesondere wird die Aufgabe gelöst durch ein System zum Wechseln eines Endeffektors an einem Roboter, aufweisend eine Haltevorrichtung und mindestens einen Endeffektor, wobei der Endeffektor reversibel mit einem Roboterelement, insbesondere einem Anschlusselement des Roboterelements, das ein Entriegelungselement, insbesondere Entriegelungshebel, aufweist, verbindbar ist, wobei der Endeffektor und/oder die Haltevorrichtung dazu ausgebildet sind, dass der Endeffektor, insbesondere über eine Translations- und/oder Rotationsbewegung, in die Haltevorrichtung so einsetzbar ist, dass der Endeffektor in einer Halteposition in der Haltevorrichtung gehalten wird, wobei die Haltevorrichtung dazu ausgebildet ist, in der Halteposition derart an dem Entriegelungselement anzuschlagen und/oder dieses aufzunehmen, dass eine Verbindung zwischen dem Roboterelement und dem Endeffektor über eine Rotation hergestellt oder gelöst werden kann.

Ein wesentlicher Gedanke der Erfindung besteht darin, dass ein Wechselvorgang (Montage- und/oder Demontage des Endeffektors) ohne die Verwendungen eines externen Antriebs, beispielsweise in der passiven Haltevorrichtung, erfolgen kann. Ein Antrieb des Roboters dient als Energiequelle oder Antrieb für den Wechselvorgang.

Durch den Entriegelungshebel kann mittels einer Rotation des Roboterelements eine Verbindung zwischen Endeffektor und Roboterelement hergestellt oder gelöst werden. Der Roboter löst oder befestigt den Endeffektor also durch eine Eigenbewegung. Sowohl der Antrieb für eine Translations- und/oder Rotationsbewegung zur Einbringung bzw. Entnahme des Endeffektors in bzw. aus der Haltevorrichtung, als auch für die Rotation zum Herstellen bzw. Lösen der Verbindung zwischen Endeffektor und Roboter wird von dem Roboter bereitgestellt. Wobei die Richtungen der Translationsbewegung entlang der Längsachse des Endeffektors und der Rotation des Endeffektors zueinander senkrecht stehen.

Hieraus ergibt sich eine Vielzahl an Vorteilen. Zum einen müssen keine zusätzlichen Bauteile, wie pneumatische Elemente oder Elektromotoren, an der Haltevorrichtung angebracht werden. Dies spart Gewicht, was speziell bei Roboterelementen und/oder Haltevorrichtungen die bewegt werden sollen von Vorteil ist. Weitere Vorteile ergeben sich im Hinblick auf die Kosten für die Produktion der Haltevorrichtung, sowie für spätere Wartungen und/oder Reparaturen. Ferner wird erfindungsgemäß vermieden, dass ein Mitarbeiter den Endeffektor händisch wechseln muss. Dies beschleunigt den Wechselvorgang um ein Vielfaches und spart zusätzlich Kosten. So können beispielsweise mehrere Wechselvorgänge von Endeffektoren pro Minute erfolgen, was sich positiv auf die Produktionszeit und folglich auf die Herstellungskosten eines Produktes auswirkt.

In einer Ausführungsform weist der Endeffektor mindestens ein Tragelement zur Halterung des Endeffektors in der Haltevorrichtung auf. Dadurch ist eine konstruktiv einfache, robuste und zuverlässige Lagerung des Endeffektors in der Haltevorrichtung gewährleistet, die lediglich auf dem Tragelement sowie der Gewichtskraft des Endeffektors beruht.

In einer weiteren Ausführungsform weist der Endeffektor eine Vielzahl, insbesondere drei, Tragelemente, insbesondere Stangen, auf, die sich vorzugsweise in radialer Richtung, senkrecht zur Rotationsachse, des Endeffektors erstrecken. Eine Ausführungsform mit mindestens zwei Tragelementen für die Ablage des Endeffektors erlaubt es, eine einseitige Belastung auf den abgelegten Endeffektor zu vermeiden. Eine bevorzugte Ausführungsform mit drei Tragelementen für die Ablage des Endeffektors erlaubt die Wahl einer definierten Auflageebene der Tragelemente des Endeffektors. Die Trageelemente sind in einer Ausführungsform äquidistant voneinander beabstandet. Durch entsprechende Wahl der Auflageebene wird eine Wiederaufnahme des Endeffektors durch den Roboter vereinfacht, ohne dass komplizierte Re-Positionierungsverfahren des Endeffektors und/oder der Haltevorrichtung nötig sind. Ferner sind die Tragelemente einfach und kostengünstig Herzustellen und zu Montieren. Beispielsweise sind zur Montage der Tragelemente Gewinde in einem Ende der Tragelemente vorgesehen. Diese werden vorzugsweise mittels komplementären Gewinden am Endeffektor befestigt. Ferner ist es auch möglich, dass die Tragelemente eine integrale Einheit mit dem Endeffektor bilden. Je nach Größe und/oder Gewicht des Endeffektors kann Material und Stärke und Anzahl der Tragelemente variiert werden.

In einer weiteren Ausführungsform weist die Haltevorrichtung mindestens einen Anschlag auf, der dazu ausgebildet ist, mit dem Entriegelungselement, insbesondere dem Entriegelungshebel, durch Rotation des Endeffektors, in Kontakt zu treten, um eine Verbindung zwischen dem Roboterelement und dem Endeffektor, mittels des Entriegelungshebels, herzustellen oder zu lösen. Durch den Anschlag wird das passive Wechseln des Endeffektors mittels des Entriegelungshebels durch eine Rotation des Roboterelements ohne zusätzliche Energiequelle ermöglicht. Der Anschlag ist an der Haltevorrichtung angebracht und kann beispielsweise durch einen Vorsprung oder einen Stift gebildet sein, der integral oder lösbar mit der Haltevorrichtung in Verbindung steht.

In einer weiteren Ausführungsform weist die Haltevorrichtung eine Anzahl von, insbesondere U-förmigen, Halteelementen auf, die der Anzahl der Tragelemente des Endeffektors entspricht, wobei die Halteelemente ausgebildet sind, um die Tragelemente durch eine Rotation des Endeffektors in sich aufzunehmen, derart, dass der Endeffektor in der Haltevorrichtung gelagert, oder aus der Haltevorrichtung entnommen werden kann. Dadurch wird ermöglicht, dass der Endeffektor mittels einer ersten Rotationsrichtung in die Haltevorrichtung hineingedreht und mittels einer zweiten, der ersten Rotationsrichtung entgegengesetzten, Rotationsrichtung aus der Haltevorrichtung herausgedreht werden kann. Des Weiteren ist die, insbesondere U-förmige, Struktur der Halteelemente derart gewählt, dass sie einer translatorischen Entnahme des eingesetzten Endeffektors aus der Haltevorrichtung, durch ein Blockieren des Weges der Tragelemente des Endeffektors, entgegenwirken, um sicherzustellen, dass der von dem Roboterelement gelöste Endeffektor fest in der Haltevorrichtung verbleibt, sobald sich das Roboterelement von dem Endeffektor entfernt. Die Halteelemente sind vorzugsweise aus einem leicht zu bearbeitbaren Material, und können daher kostengünstig, beispielsweise durch Fräsen, 3D-Druck oder sonstige additive Verfahren, hergestellt werden.

In einer weiteren Ausführungsform weist die Haltevorrichtung eine Öffnung auf, in die der Endeffektor, insbesondere durch eine Translationsbewegung eingebracht werden kann. In einer Ausführungsform weist die Öffnung eine rotationsymmetrische Form auf. Dadurch wird ermöglicht, dass die Haltevorrichtung für eine Vielzahl an Geometrien von Endeffektoren verwendet werden kann. Speziell die Länge der verwendeten Endeffektoren kann auf Grund der Öffnung variieren. Der maximale Durchmesser des Endeffektors kann einen Bruchteil des Durchmessers der Öffnung der Haltevorrichtung betragen, nur die Länge der Tragelemente wird entsprechend dem Durchmesser der Öffnung der Haltevorrichtung gewählt. In einer speziellen Ausführungsform für das Wechseln von beispielsweise sehr flachen, oder entsprechenden geformten, Endeffektoren kann die Öffnung der Haltevorrichtung auch entfallen.

In einer weiteren Ausführungsform umfasst das System einen Roboter mit einem Roboterelement. Dadurch ergeben sich entsprechende Vorteile, wie diese bereits in Verbindung mit dem System beschrieben wurden und eine passive Art des Wechselns eines Endeffektors wird ermöglicht, indem die für den Wechselvorgang benötigte Energie durch den Roboter aufgebracht wird.

Insbesondere wird die erfindungsgemäße Aufgabe durch ein Verfahren zum Lösen eines Endeffektors von einem Roboter unter Verwendung einer Haltevorrichtung gelöst, das die folgenden Schritte umfasst:
- Einbringen des Endeffektors durch eine, insbesondere translatorische, Bewegung des Roboterelements in eine Öffnung der Haltevorrichtung,
- Rotation, insbesondere um wenige Grad, und/oder Translation des Roboterelements mit Endeffektor
wobei
- sich die Trageelemente des Endeffektors bei der Rotation und/oder Translation in Halteelemente der Haltevorrichtung hineinbewegen, und
- durch in Kontakt treten, eines Entriegelungselements, insbesondere eines Entriegelungshebels, des Roboterelements mit einem Anschlag der Haltevorrichtung die Verbindung zwischen Endeffektor und Roboterelement gelöst wird.

Auch hier ergeben sich entsprechende Vorteile, wie diese bereits in Verbindung mit dem System beschrieben wurden.

Insbesondere wird die erfindungsgemäße Aufgabe auch durch ein Verfahren zum Verbinden eines Endeffektors mit einem Roboter unter Verwendung einer Haltevorrichtung, das die folgenden Schritte umfasst:
- in Kontakt bringen des Roboterelements und des Endeffektors, durch eine, insbesondere translatorische, Bewegung des Roboterelements,
- Rotation, insbesondere um wenige Grad, und/oder Translation des Roboterelements,
wobei
- sich die Trageelemente des Endeffektors bei der Rotation und/oder Translation aus Halteelementen der Haltevorrichtung hinausbewegen, und
- durch in Kontakt treten eines Entriegelungshebels des Roboterelements mit einem Anschlag der Haltevorrichtung die Verbindung zwischen Endeffektor und Roboterelement hergestellt wird.

Auch hier ergeben sich entsprechende Vorteile, wie diese bereits in Verbindung mit dem System beschrieben wurden.

Die Verfahren können unter Verwendung eines der bereits beschriebenen Systeme umgesetzt werden. In einer Ausführungsform wird zumindest eine der beschriebenen Haltevorrichtungen, ggf. losgelöst von dem System verwendet.

Die eingangs genannte Aufgabe wird ebenfalls durch ein computerlesbares Speichermedium gelöst, welches Instruktionen enthält, die eine Recheneinheit, insbesondere eine Steuereinrichtung eines Roboters, dazu veranlassen eines oder beide der oben beschriebenen Verfahren zu implementieren.

Weitere vorteilhafte Ausführungsformen ergeben sich anhand der Unteransprüche.

Nachfolgend wird die Erfindung anhand von Ausführungsbeispielen beschrieben, welche mittels Abbildungen näher erläutert werden.

Hierbei zeigen:
- Fig. 1: eine schematische Ansicht einer Haltevorrichtung sowie eines Endeffektors an einem Roboter, bevor der Endeffektor in der Haltevorrichtung abgelegt wird;
- Fig. 2a: eine schematische Ansicht einer Haltevorrichtung sowie eines Endeffektors an einem Roboter, während der Endeffektor in der Haltevorrichtung abgelegt wird, bevor Roboterelement und Endeffektor getrennt sind, und der Endeffektor noch nicht in einer Halteposition abgelegt ist;
- Fig. 2b: eine schematische Ansicht einer Haltevorrichtung sowie eines Endeffektors an einem Roboter, während der Endeffektor in der Haltevorrichtung abgelegt wird, bevor Roboterelement und Endeffektor getrennt sind, und der Endeffektor in einer Halteposition abgelegt ist;
- Fig. 3: eine schematische Ansicht einer Haltevorrichtung sowie eines Endeffektors von einem Roboter, nach der Trennung von Roboterelement und Endeffektor;
- Fig. 4: eine schematische Ansicht einer Haltevorrichtung sowie eines Endeffektors von einem Roboter, wobei der Endeffektor mit einem Roboterelement verbunden ist, und aus der Haltevorrichtung entnommen wird;

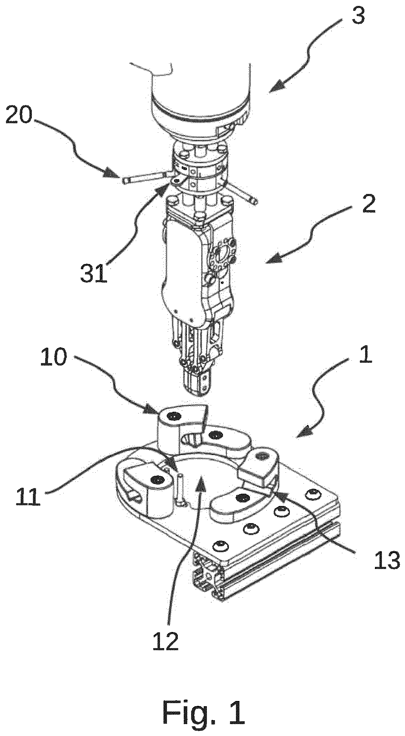

Fig. 1 zeigt eine schematische Ansicht einer Haltevorrichtung 1, sowie einen Endeffektor 2 an einem Roboterelement 3 eines Roboters. In der Haltevorrichtung 1 ist eine Öffnung 12 ausgebildet, in die der Endeffektor 2 insbesondere durch eine Translationsbewegung des Roboters eingebracht werden kann.

Der Endeffektor 2 weist drei Tragelemente 20 auf, die vorzugsweise als Stangen ausgebildet sind. Die Tragelemente 20 sind vorzugsweise aus einem Metall, einer metallischen Legierung, oder für spezielle Anwendungen aus einem nichtleitenden Material mit rundem Querschnitt und haben in diesem Ausführungsbeispiel einen Durchmesser im Bereich von 0.1 bis 2 cm. Je nach Gewicht des Endeffektors 2, oder anderen Anforderung, kann die Anzahl der Tragelemente 20 sowie deren Querschnittsgeometrie variieren.

Die Anordnung der Tragelemente 20 kann in Bezug auf den Endeffektor 2 unterschiedlich gestaltet sein. In den gezeigten Ausführungsbeispielen sind drei Tragelemente 20 mit einer relativen Winkelverteilung von 0°, 120° und 240° radial um den Endeffektor angeordnet. Vorzugsweise sind alle Tragelemente 20 des Endeffektors 2 auf derselben Höhe des Endeffektors 2, vorzugsweise in einer Ebene liegend, angeordnet. Es ist erfindungsgemäß auch möglich, dass die Anordnung der einzelnen Tragelemente 20 bezüglich der Höhe an dem Endeffektor 2 variiert, falls, beispielsweise, eine eindeutig vorgegebene Halteposition des Endeffektors 2 in der Haltevorrichtung 1 vorgesehen ist (nicht dargestellt).

Die Haltevorrichtung 1 weist eine Anzahl an Halteelementen 10 auf, die in ihrer Anzahl der Anzahl der Tragelemente 20 des Endeffektors 2 entspricht. Die Halteelemente 10 haben eine U-förmige Struktur, die es ermöglicht die Tragelemente des Endeffektors aufzunehmen, wie nachfolgend beschrieben wird.

Ferner weist die Haltevorrichtung 1 einen Anschlag 11 auf, der dazu ausgebildet ist, einen Entriegelungshebel 31 des Roboterelements 3 bei Rotation derart anschlagen zu lassen, um seitens des Roboterelements 3 einen Mechanismus zu betätigen, der eine Verbindung zwischen dem Roboterelement 3 und dem Endeffektor 2, je nach Rotationsrichtung, entweder herstellt oder löst. Wobei es sich bei dem Mechanismus in einer Ausführungsform um einen Bajonettverschluss handeln kann.

In Fig. 1 ist der Anschlag 11 als ein Stift ausgebildet, der parallel zu einer Einbringrichtung des Endeffektors in die Haltevorrichtung verläuft. Die Geometrie des Anschlags 11 ist nicht auf die eines Stiftes beschränkt. Alternativ kann, beispielsweise, ein Eingriff oder ein Haken für das Element des Anschlags 11 vorgesehen sein, der durch eine Interaktion mit dem Roboterelement 3 die Verbindung zwischen Endeffektor 2 und Roboterelement 3 entweder herstellt oder löst (nicht dargestellt). In Fig. 1 ist ein einziger Anschlag 11 und ein Entriegelungshebel 31 gezeigt. Allerdings ist das System nicht auf diese Anzahl beschränkt. Das System kann eine Vielzahl von Anschlägen 11 und Entriegelungshebel 31 aufweisen (nicht dargestellt).

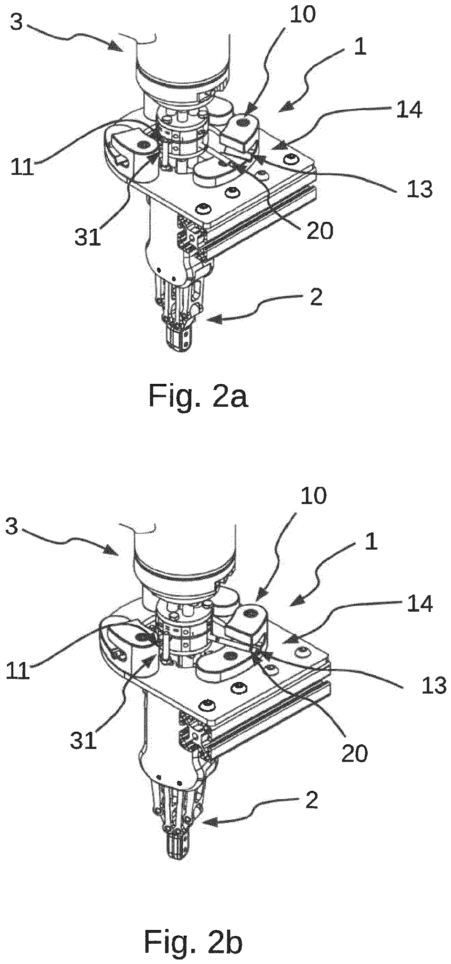

In Fig. 2a ist der Endeffektor 2 durch eine Translationsbewegung derart in die Haltevorrichtung aufgenommen, dass die Tragelemente 20 des Endeffektors 2 in einer ersten Position mit den Halteelementen 10 der Haltevorrichtung 1 in Kontakt stehen. Die Struktur der Halteelemente 10 ist derart ausgebildet, dass sie die Rotationsfreiheit der Tragelemente 20 in einer Richtung begrenzt. Ferner weisen die Halteelemente 10 eine Vertiefung 13 auf, die in ihrer Form dem Querschnitt der Tragelemente 20 angepasst sind. In den Vertiefungen der Halteelemente 10 können die Tragelemente 20 des Endeffektors 2 spielfrei in einer Halteposition gelagert werden. Dabei spannen die Vertiefungen 13 eine definierte Ablageebene für die Trageelemente 20 des Endeffektors 2 auf, um eine definierte und reproduzierbare Halteposition für den Endeffektor 2 zu ermöglichen und dadurch eine Aufnahme zur Entnahme des Endeffektors 2 durch das Roboterelement 3 zu optimieren. Die Haltevorrichtung 1 weist ferner eine Oberfläche 14 auf. Die Ablageebene für die Tragelemente 20 ist eine Ebene die parallel zu der Oberfläche 14 ist. Die Ebene, die durch die Rotation der Trageelemente 20, zur Ablage oder Entnahme des Endeffektors 2 gebildet wird, ist ebenfalls eine Ebene, die parallel zur der Oberfläche 14 der Haltevorrichtung 1 ist.

In Fig. 2b wird der Endeffektor 2 durch das Roboterelement 3 durch eine Rotation um seine Längsachse in Bewegung versetzt, wie in Fig. 2b gezeigt insbesondere durch eine Rotation des Endeffektor 2 gegen den Uhrzeigersinn. Je nach Struktur der Halteelemente 10, wird eine Rotation zur Ablage des Endeffektors 2 um wenige Grad im Bereich von 0° bis 30° durchgeführt. Durch in Kontakttreten des Entriegelungshebels 31 des Roboterelements 3 mit dem Anschlag 11 der Haltevorrichtung 1, wird die Verbindung zwischen Endeffektor 2 und Roboterelement 3 gelöst, und der Endeffektor 2 in eine zweite Position gebracht, in der die Tragelemente 20 des Endeffektors 2 in den Vertiefungen 13 der Halteelemente 10 der Haltevorrichtung 1 spielfrei abgelegt werden. In dieser zweiten Position, der Halteposition, des Endeffektors 2 ist eine Entnahme durch eine Translationsbewegung des Endeffektors 2 nicht möglich, da sie durch die Struktur der Halteelemente 10 verhindert wird, um sicherzustellen, dass der von dem Roboterelement 3 gelöste Endeffektor 2 sicher in der Haltevorrichtung 1 verbleibt, sobald sich das Roboterelement 3 von dem Endeffektor entfernt.

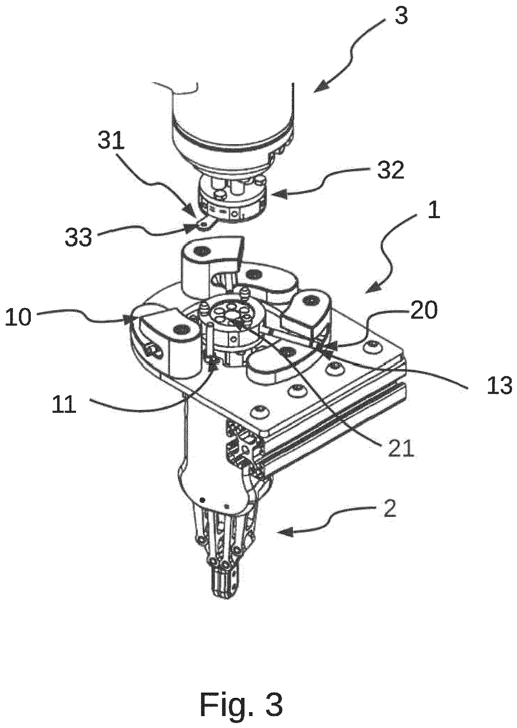

In Fig. 3 ist ein Endeffektor 2 von einem Roboterelement 3 getrennt dargestellt. Der Endeffektor 2 ist in einer Haltevorrichtung 1 in einer wie zuvor beschriebenen Halteposition abgelegt. In dieser Halteposition befinden sich die Tragelemente 20 des Endeffektors 2 in Vertiefungen 13 der Halteelemente 10 der Haltevorrichtung 1. Dies ermöglicht eine spielfreie Lagerung des Endeffektors 2 in der Halteposition der Haltevorrichtung 1.

Um das Roboterelement 3 wieder mit dem Endeffektor 2 zu verbinden, muss ein Anschlusselement 32 des Roboterelements 3 mit einer Schnittstelle 21 des Endeffektors 2 in Kontakt gebracht werden. Nach dem Kontaktieren des Roboterelements 3 und der Schnittstelle 21 des Endeffektors 2 bewirkt in einer Ausführungsform eine Rotation des Roboterelements 3, insbesondere eine Rotation im Uhrzeigersinn, dass der Entriegelungshebel 31 derart an dem Anschlag 11 der Haltevorrichtung 1 anschlägt, dass eine mechanische Verbindung zwischen dem Endeffektor 2 und dem Anschlusselement 32 des Roboterelements 3 hergestellt wird, und dass sich die Tragelemente 20 des Endeffektors 2 aus den Halteelementen 10 der Haltevorrichtung 1 soweit herausdrehen, bis sich die Tragelemente 20 in Bezug auf die Halteelemente 10 in einer dritten Position, die insbesondere der zuvor beschriebenen ersten Position entspricht, befinden, und der Endeffektor 2 durch das Roboterelement 3 aus der Haltevorrichtung 1, insbesondere durch eine Translationsbewegung, entnommen werden kann. Je nach Struktur der Halteelemente 10, wird für die Entnahme bzw. Aufnahme eine Rotation des Endeffektors 2 um wenige Grad im Bereich von 0° bis 30° durchgeführt.

In einem Ausführungsbeispiel weist der Entriegelungshebel 31 ein Loch 33 auf, in das der Anschlag 11 der Haltevorrichtung 1 aufgenommen werden kann. Dies ermöglicht eine bidirektionale Betätigung des Entriegelungshebels 31 in einer definierten Position, wobei hierdurch eine Montage und eine Demontage des Endeffektors 2 bewerkstelligt werden kann.

In einem Ausführungsbeispiel wird der Entriegelungshebel 31 zum Verbinden und zum Lösen von Roboterelement 3 und Endeffektor 2 in derselben Richtung, durch Anschlagen an den Anschlag 11 der Haltevorrichtung 1, ausgelöst. Dies wird ermöglicht, indem die Struktur der Halteelementen 10 ein Überdrehen der Tragelemente 10 in Einbringrichtung ermöglichen, dass der Entriegelungshebel 31 an den Anschlag 11 anschlagen kann, um eine Verbindung zwischen Roboterelement 3 und Endeffektor 2 herzustellen. Nach dem Verbinden zwischen Roboterelement 3 und Endeffektor 2 wird durch eine Umkehr der Rotationsrichtung der Endeffektor 2 aus der Haltevorrichtung 1 entnommen.

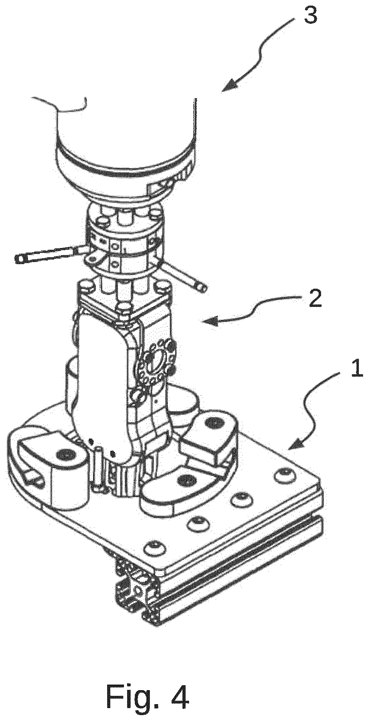

In einem Ausführungsbeispiel wird der Entriegelungshebel 31 lediglich zum Lösen der Verbindung zwischen Roboterelement 3 und Endeffektor 2 durch Anschlagen an den Anschlag 11 der Haltevorrichtung 1 betätigt. Die Verbindung zwischen Roboterelement 3 und Endeffektor 2 wird durch einen Hebel mit einem Federmechanismus hergestellt, der bei Kontaktierung des Roboterelements 3 und des Endeffektors 2 ausgelöst wird. In einer Ausführungsform wird durch Anschlagen des Entriegelungshebels 31 an den Anschlag 11 der Haltevorrichtung ein schaltbarer Dauermagnet zum Herstellen und Lösen der Verbindung zwischen Endeffektor 2 und Roboterelement 3 betätigt. Fig. 4 ist eine schematische Ansicht in der ein Endeffektor 2 mit einem Roboterelement 3 in einer Haltevorrichtung 1, wie zuvor beschrieben, in Verbindung gebracht wurde, und der Endeffektor 2 durch eine translatorische Bewegung des Roboterelements 3 aus der Haltevorrichtung entnommen wird.

### Bezugszeichenliste

- 1: Haltevorrichtung
- 10: Halteelemente
- 11: Anschlag
- 12: Öffnung
- 13: Vertiefung
- 14: Oberfläche
- 2: Endeffektor
- 20: Tragelemente
- 21: Schnittstelle des Endeffektors
- 3: Roboterelement
- 31: Entriegelungshebel
- 32: Anschlusselement
- 33: Loch

## Patentansprüche

1. System zum Wechseln eines Endeffektors an einem Roboter, aufweisend eine Haltevorrichtung (1) und mindestens einen Endeffektor (2),
wobei der Endeffektor (2) reversibel mit einem Roboterelement (3), insbesondere einem Anschlusselement des Roboterelements (3), das ein Entriegelungselement, insbesondere ein Entriegelungshebel (31), aufweist, verbindbar ist,
wobei der Endeffektor (2) und/oder die Haltevorrichtung dazu ausgebildet sind, dass der Endeffektor (2), insbesondere über eine Translations- und/oder Rotationsbewegung; in die Haltevorrichtung (1) so einsetzbar ist, dass der Endeffektor in einer Halteposition in der Haltevorrichtung gehalten wird,
wobei die Haltevorrichtung (1) dazu ausgebildet ist, in der Halteposition derart an dem Entriegelungselement anzuschlagen und/oder dieses aufzunehmen, dass eine Verbindung zwischen dem Roboterelement (3) und dem Endeffektor (2) über eine Rotation hergestellt oder gelöst werden kann.

2. System zum Wechseln eines Endeffektors an einem Roboter nach Anspruch 1,
**dadurch gekennzeichnet, dass**
der Endeffektor (2) mindestens ein Tragelement (20) zur Halterung des Endeffektors in der Haltevorrichtung (1) aufweist.

3. System zum Wechseln eines Endeffektors an einem Roboter nach Anspruch 2,
**dadurch gekennzeichnet, dass**
der Endeffektor (2) eine Vielzahl, insbesondere drei, Tragelemente (20), insbesondere Stangen, aufweist, die sich vorzugsweise in radialer Richtung des Endeffektors (2) erstrecken.

4. System zum Wechseln eines Endeffektors an einem Roboter nach einem der vorherigen Ansprüche,
**dadurch gekennzeichnet, dass**
die Haltevorrichtung (1) mindestens einen Anschlag (11) aufweist, der dazu ausgebildet ist,
mit dem Entriegelungselement, insbesondere dem Entriegelungshebel (31), durch Rotation des Endeffektors (2), in Kontakt zu treten, um eine Verbindung zwischen dem Roboterelement (3) und dem Endeffektor (2), mittels des Entriegelungshebels (31), herzustellen oder zu lösen.

5. System zum Wechseln eines Endeffektors an einem Roboter nach einem der vorherigen Ansprüche,
**dadurch gekennzeichnet, dass**
die Haltevorrichtung (1) eine Anzahl von, insbesondere U-förmigen Halteelementen (10), aufweist, die der Anzahl der Tragelemente (20) des Endeffektors (2) entspricht, wobei
die Halteelemente (10) ausgebildet sind, um die Tragelemente (20) durch eine Rotation des Endeffektors (2) in sich aufzunehmen, derart, dass der Endeffektor (2) in der Haltevorrichtung (1) gelagert oder aus der Haltevorrichtung (1) entnommen werden kann.

6. System zum Wechseln eines Endeffektors an einem Roboter nach einem der vorherigen Ansprüche,
**dadurch gekennzeichnet, dass** die Haltevorrichtung (1) eine Öffnung (12) aufweist, in die der Endeffektor (2), insbesondere durch eine Translationsbewegung, eingebracht werden kann.

7. System zum Wechseln eines Endeffektors an einem Roboter nach einem der vorherigen Ansprüche,
**dadurch gekennzeichnet, dass** das System einen Roboter mit dem Roboterelement (3) umfasst.

8. Verfahren zum Lösen eines Endeffektors (2) von einem Roboterelement unter Verwendung einer Haltevorrichtung (1), umfassend die Schritte:
- Einbringen des Endeffektors (2) durch eine, insbesondere translatorische, Bewegung des Roboterelements (3) in eine Öffnung (12) der Haltevorrichtung (1),
- Rotation, insbesondere um wenige Grad, und/oder Translation des Roboterelements (3) mit Endeffektor (2)
**dadurch gekennzeichnet, dass**
- sich die Trageelemente (20) des Endeffektors (2) bei der Rotation und/oder Translation in Halteelemente (10) der Haltevorrichtung (1) hineinbewegen, und
- durch in Kontakt treten, eines Entriegelungselements, insbesondere eines Entriegelungshebels (31), des Roboterelements (3) mit einem Anschlag (11) der Haltevorrichtung (1) die Verbindung zwischen Endeffektor (2) und Roboterelement (3) gelöst wird.

9. Verfahren zum Verbinden eines Endeffektors mit einem Roboterelement (3), umfassend die Schritte:
- in Kontakt bringen des Roboterelements (3) und des Endeffektors (2), durch eine, insbesondere translatorische, Bewegung des Roboterelements (3),
- Rotation , insbesondere um wenige Grad, und/oder Translation des Roboterelements (3)
**dadurch gekennzeichnet, dass**
- sich die Trageelemente (20) des Endeffektors (2) bei der Rotation und/oder Translation aus Halteelementen (10) der Haltevorrichtung (1) hinausbewegen, und
- durch in Kontakt treten eines Entriegelungshebels (31) des Roboterelements (3) mit einem Anschlag (11) der Haltevorrichtung (1) die Verbindung zwischen Endeffektor (2) und Roboterelement (3) hergestellt wird.

10. Computerlesbares Speichermedium, welches Instruktionen enthält, die eine Recheneinheit, insbesondere eine Steuereinrichtung eines Roboters, dazu veranlassen ein Verfahren nach Anspruch 8 und/oder 9 zu implementieren.
